# EUROPÄISCHE PATENTSCHRIFT

(11) **EP 1 329 761 B1**
(45) Veröffentlichungstag und Bekanntmachung des Hinweises auf die Patenterteilung: **19.03.2008**
(21) Anmeldenummer: 03000858.5
(22) Anmeldetag: 15.01.2003
(51) Int. Cl.: G02C 7/08

(54) **Mikroskop mit einer Fokussiereinrichtung**
Microscope with a focussing device
Microscope avec un dispositif de focalisation

(30) Priorität: 18.01.2002 DE 10201835
(43) Veröffentlichungstag der Anmeldung: 23.07.2003
(73) Patentinhaber: Leica Microsystems (Schweiz) AG, 9435 Heerbrugg (CH)
(72) Erfinder: Sander, Ulrich, Dr., 9445 Rebstein (CH)
(74) Vertreter: Rosenich, Paul

(56) Entgegenhaltungen:
- WO-A-01/38919
- WO-A-96/09566
- DE-A- 4 101 780
- US-A- 5 644 374
- US-B1- 6 318 857

## Beschreibung

Die Erfindung betrifft ein Mikroskop, mit einer Fokussiereinrichtung, die eine Variation des optischen Abstandes zwischen einem Beobachterauge und einem Objekt erlaubt

Für Mikroskope wird häufig die Eigenschaft verlangt, dass der freie Arbeitsabstand des optischen Gerätes in einem bestimmten Bereich verändert werden kann, typischerweise zwischen 200 mm und 400 mm (auch Fokussierbereich genannt). Dies wird derzeit dadurch erreicht, dass mindestens ein optisches Element - beispielsweise eine Linse oder eine Linsengruppe - axial in der optischen Achse verschoben wird, was eine Brennweitenveränderung bewirkt. Dies führt in der Regel zu einer Veränderung der Baulänge, vgl. "SIGMA OBJEKTIV KATALOG", Tokio 201, 3 Seiten, ohne Publikationsangaben, erhalten im Jahre 2000.

Ein alterssichtiges Auge - mit nicht mehr akkommodationsfähiger Augenlinse - sieht nur noch in einem bestimmten Abstand scharf. Diesem Nachteil wird durch die Verwendung einer Brille abgeholfen. Neuerdings gibt es auch Linsen in Form eines Gleitsichtglases. Beim Gleitsichtglas ändert sich die Brechkraft des Korrekturglases lateral über die Brillenglasfläche. Schaut das Auge nun durch die unterschiedlichen Brechkraft-Areale, beispielsweise von oben nach unten, kann es trotz Akkommodationsschwäche in unterschiedlichen Entfernungen scharf sehen.

Die Patentschrift US 5,644,374 offenbart eine Brille nach dem Prinzip einer sogenannten Alvarez-Linse, bei der zwei gegeneinander verschiebbare komplementäre Linsen eine Veränderung der gesamten Brechkraft der beiden Linsen und des dazwischenliegenden Mediums erreicht wird. Es werden Maßnahmen zur Vermeidung der Stabsichtigkeit beschrieben.

Die Veröffentlichungsschrift WO 01/38919 offenbart eine Lupenbrille, in deren Strahlengängen zwei optische Elemente beschrieben werden, die so bewegt werden können, dass ein Parallaxenausgleich stattfindet.

Heute verwendete Gleitsichtgläser bestehen aus anorganischen optischen Glasmaterialien oder aus Kunststoffen, z.B. Polycarbonat etc.

In der Vergangenheit wurden statt Gleitsichtgläsern aufgrund einfacherer Herstellung häufig Mehrstärkengläser eingesetzt, welche verschiedene Zonen mit unterschiedlicher Brechkraft besitzen. Diese ermöglichen es dem Benutzer ebenso, in verschiedenen Entfernungen scharf zu sehen, ohne dass die eigene Augenlinse akkommodiert.

Der Erfinder erkannte, dass die Fokussierung auf ein Objekt mittels axial verschiebbarer Linsen oder Linsengruppen - wie bei herkömmlichen Mikroskopen - in Bezug auf die folgenden Punkte nachteilig ist
a) Veränderungen in der Baulänge.
b) Höheres Gewicht aufgrund großer Baulänge.
c) Teilweise aufwändige konstruktive Lösungen, wenn die Fokussierung 'im freien Raum', d.h. ohne festes Gehäuse mit der entsprechenden Mechanik, beispielsweise bei einer Lupenbrille, erfolgen soll.
d) Linsengruppen sind schwer austauschbar und daher ist der Einsatzbereich von Mikroskopen eingeschränkt.

Aufgabe der Erfindung ist es daher, eine Einrichtung an einem Mikroskop zu schaffen, welche eine Fokussierung auf ein Objekt ohne axiale Verschiebung von Linsen und/oder Linsengruppen erlaubt.

Gelöst wird diese Aufgabe durch den Einsatz eines an sich bekannten Gleitsicht- oder Mehrstärkenglases im oder am Mikroskop.

Dieser technischen Neuerung liegt das Prinzip der herkömmlichen Mehrstärkengläser oder der Gleitsichtbille zugrunde, vgl. den Prospekt "Zeiss Brillengläser 1985", Dokumenten-Nr.: 20-955-d, 1/85, Januar 1985.

Bewegt man ein - dort beschriebenes - Gleitsichtglas vor oder hinter einem optischen Instrument, so erzielt man eine Brennweitenveränderung. Um die Brennweitenveränderung herbeizuführen, erfolgt die Bewegung des Glases im Gegensatz zu den bekannten Verfahren mit axialer Verschiebung der Linsen etwa senkrecht zur optischen Achse. Aus praktischen Gründen sollte der Einsatz des Gleitsichtglases möglichst in der Nähe der Pupille geschehen. Damit ist auch eine einfache Auswechselbarkeit des Gleitsicht-oder Mehrstärkenglases möglich, so dass unterschiedliche Einsatzbereiche geschaffen werden.

Weitere mögliche Anwendungen sind zum Beispiel Okulare, Ferngläser, Fernrohre, Fotoobjektive und viele andere optische Instrumente, die eine Brennweitenänderung, Arbeitsabstandsänderung oder Fokussierung erfordern.

Die Erfindung ist im Anspruch 1 definiert. Sie setzt zwar an sich bekannte Gleitsicht- oder Mehrstärkengläser ein, jedoch für einen anderen Zweck, nämlich nicht zur Korrektur von Augenfehlem, sondern zur Brennweitenveränderung eines Mikroskops.

Durch die vorliegend beschriebene Einrichtung werden die folgenden Verbesserungen erreicht:
- Kurze Baulängen.
- Geringes Gewicht.
- Anwendbarkeit bei allen optischen Instrumenten, welche eine Brennweitenänderung, Arbeitsabstandsänderung oder Fokussierung benötigen.

Anhand der Zeichnung wird die Erfindung beispielhaft näher erläutert. Es zeigen dabei:

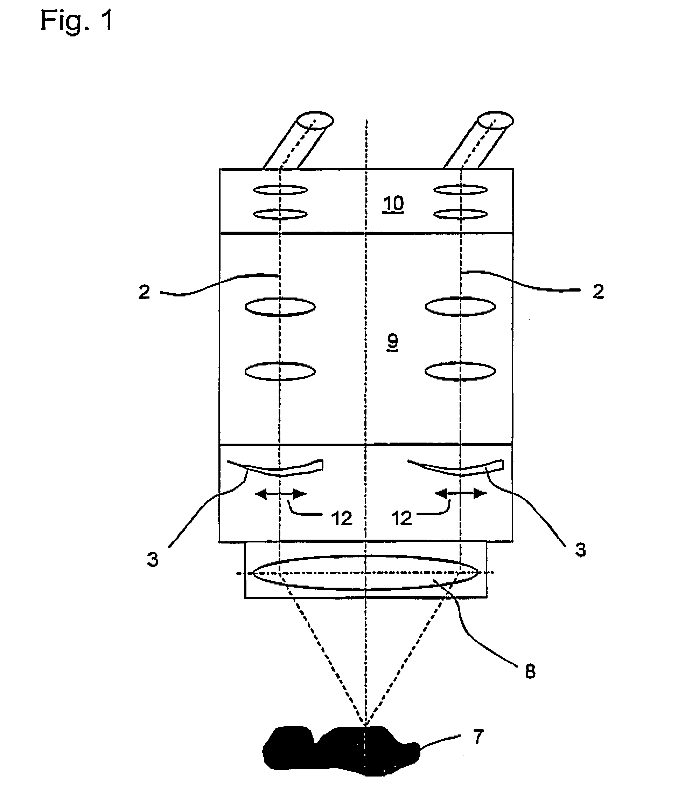

Fig. 1: eine erfindungsgemäße Ausführungsform (Mikroskop).

In Fig. 1 ist eine erfindungsgemäße optische Einrichtung zur Abstandsvariation anhand des Beispiels eines Mikroskops schematisch dargestellt.

Das auf das gemeinsame Hauptobjektiv 8 auftreffende Licht wird an diesem gebrochen und auf jeweils ein in senkrechter Richtung zu den optischen Achsen 2 der beiden Beobachtungsstrahlenbündel verschiebbares Gleitsichtglas 3 - vgl. die Doppelpfeile 12 - gelenkt, welches sich jeweils zwischen dem Hauptobjektiv 8 und dem Zoom 9 befindet. Die an den Gleitsichtgläsern 3 gebrochenen Lichtstrahlen werden über den Zoom 9 zum Tubus 10 mit den Okularen 10 weitergeleitet.

Durch eine Verschiebung des Gleitsichtglases 3 senkrecht zur optischen Achse 2 des Beobachtungsbereiches werden unterschiedliche Fokuswerte (Beobachterauge 1 - Objekt 7) erreicht.

Die Verschiebung des Gleitsichtglases 3 kann nicht nur seitlich linear, sondern auch kreisbogenförmig erfolgen.

Anstelle des Gleitsichtglases kann - wie schon erwähnt - als Variante der Erfindung auch ein Mehrstärkenglas, was zu diskontinuierlichen Fokusbereichen führt, oder auch eine Kombination aus beiden eingesetzt werden.

### Bezugszeichenliste

- 2: optische Achse(n) der beiden Beobachtungsstrahlenbündel
- 3: Gleitsichtglas oder Mehrstärkenglasl-gläser
- 7: Objekt
- 8: Hauptobjektiv
- 9: Zoom
- 10: Tubus (mit Okularen)
- 12: Doppelpfeil (Verschiebbarkeit)

## Patentansprüche

1. Mikroskop mit zwei Beobachtungsstrahlenbündeln (2), mit einem Hauptobjektiv (8) für beide Beobachtungsstrahlenbündel (2), mit einem Zoom (9), mit einer Einrichtung zur Fokussierung auf ein Objekt (7) und mit wenigstens einer optischen Linse (3) in jedem der Beobachtungsstrahlenbündel (2) **dadurch gekennzeichnet, dass** diese wenigstens eine der Linsen (3) in jedem der Beobachtungsstrahlen bündel zur Fokussierung auf das Objekt (7) als bezüglich der optischen Achse des zugehörigen Beobachtungssüahlenbündels (2) lateral verschiebbares Mehrstärken-und/oder Gleitsichtglas ausgebildet ist um somit eine Fokussierung auf das Objekt ohne axiale Verschiebung der Linsen zu erlauben.

2. Mikroskop nach Anspruch 1, **dadurch gekennzeichnet, dass** die Verschiebbarkeit des Mehrstärken- und/oder Gleitsichtglases (3) entlang eines Kreisbogens (11) erfolgt

3. Mikroskop nach einem der vorhergehenden Ansprüche, **dadurch gekennzeichnet, dass** die Verschiebung des Mehrstärken- und/oder Gleitsichtglases (3) motorisch ansteuerbar ist

4. Mikroskop nach Anspruch **3, dadurch gekennzeichnet, dass** der motorische Antrieb ein Autofokussystem und eine dazugehörige elektronische Auswertungs- und Steuereinheit umfasst.

5. Mikroskop nach einem der vorhergehenden Ansprüche, **dadurch gekennzeichnet, dass** für eine stereoskopische Betrachtung die Mehrstärken- und/oder Gleitsichtgläser (3) jeweils paarweise fest miteinander verbunden sowie gemeinsam lateral verschiebbar sind.

6. Mikroskop nach einem der vorhergehenden Ansprüche, **dadurch gekennzeichnet, dass** das verschiebbare Mehrstärken- und/oder Gleitsichtglas (3) zwischen vor- und nachgelagerten Linsen (8, 9) oder Linsengruppen angeordnet ist.

## Claims

1. Microscope having two observation beams (2), a main objective (8) for both observation beams (2), a zoom (9) with a device for focusing on an object (7) and at least one optical lens (3) in each of the observation beams (2), **characterized in that** this at least one of the lenses (3) in each of the observation beams (2) is formed as a multifocal lens and/or a continuous vision lens which can be moved laterally with respect to the optical axis of the corresponding observation beam (2) to focus on the object (7), in order to thus allow focusing on the object (7) without axial movement of the lenses.

2. Microscope according to Claim 1, **characterized in that** the multifocal and/or continuous vision lens (3) moves or move along a circular arc (11).

3. Microscope according to one of the preceding claims, **characterized in that** the movement of the multifocal and/or continuous vision lens (3) can be driven by a motor.

4. Microscope according to Claim 3, **characterized in that** the motorized drive comprises an auto-focus system and a corresponding electronic evaluation and control unit.

5. Microscope according to one of the preceding claims, **characterized in that**, for a stereoscopic view, the multifocal and/or continuous vision lenses (3) are in each case firmly connected to one another in pairs and together can be moved laterally.

6. Microscope according to one of the preceding claims, **characterized in that** the movable multifocal and/or continuous vision lens (3) is or are arranged between lenses (8, 9) or lens groups arranged upstream and downstream.

## Revendications

1. Microscope comportant deux faisceaux de rayons d'observation (2), un objectif principal (8) pour les deux faisceaux de rayons d'observation (2), un zoom (9), un dispositif de focalisation sur un objet (7) et au moins une lentille optique (3) dans chacun des faisceaux de rayons d'observation (2), **caractérisé en ce que** cette au moins une des lentilles (3), dans chacun des faisceaux de rayons d'observation, pour la focalisation sur l'objet (7), est réalisée sous forme d'un verre multifocal et/ou progressif pouvant être déplacé latéralement par rapport à l'axe optique du faisceau de rayon d'observation associé (2) afin de permettre ainsi une focalisation sur l'objet sans déplacement axial des lentilles.

2. Microscope selon la revendication 1, **caractérisé en ce que** la possibilité de déplacement du verre multifocal et/ou progressif (3) a lieu le long d'un arc de cercle (11).

3. Microscope selon une des revendications précédentes, **caractérisé en ce que** le déplacement du verre multifocal et/ou progressif (3) est contrôlable de manière motorisée.

4. Microscope selon la revendication 3, **caractérisé en ce que** la commande motorisée englobe un système d'auto-focalisation et une unité électronique d'exploitation et de commande s'y rattachant.

5. Microscope selon une des revendications précédentes, **caractérisé en ce que**, pour permettre une observation stéréoscopique, les verres multifocaux et/ou progressifs (3) sont respectivement reliés fixement entre eux par paires et sont aussi déplaçables latéralement ensemble.

6. Microscope selon une des revendications précédentes, **caractérisé en ce que** le verre multifocal et/ou progressif (3) est disposé entre des lentilles placées en amont et des lentilles placées en aval (8, 9) ou des groupes de lentilles.
